Europäisches Patentamt

European Patent Office

Office européen des brevets

(11) Publication number: **0 186 233 B1**

# EUROPEAN PATENT SPECIFICATION

(45) Date of publication of patent specification: **23.09.92**   (51) Int. Cl.⁵: **A23C 9/154**, A23L 1/187

(21) Application number: **85202008.0**

(22) Date of filing: **02.12.85**

(54) **Dessert product selected from the group consisting of pudding and custard and process for preparing such dessert product.**

(30) Priority: **05.12.84 NL 8403701**

(43) Date of publication of application:
**02.07.86 Bulletin 86/27**

(45) Publication of the grant of the patent:
**23.09.92 Bulletin 92/39**

(84) Designated Contracting States:
**AT BE CH DE FR GB IT LI LU NL SE**

(56) References cited:
**GB-A- 2 020 667**
**US-A- 4 362 761**

**DEUTSCHE MOLKEREIZEITUNG, vol. 101, no. 48, 1980, pages 1788-1791, Munich, DE; M. HERRMANN et al.: "Gedanken zur Gewinnung und Verwendung von Molkenproteinen-Ouarkähnliche Dessertprodukte"**

**JOURNAL OF DAIRY SCIENCE, vol. 57, no. 12, December 1974, pages 1438-1443; F.E. McDONOUCH et al.: "Composition and properties of whey protein concentrates from ultrafiltration"**

**Grundlagen der org. Chemie (1977), page 916, lines 9-12**

(73) Proprietor: **CAMPINA MELKUNIE B.V.**
**Europalaan 6a**
**NL-5232 BC 's-Hertogenbosch(NL)**

(72) Inventor: **Koenraads, J.P.J.M.**
**Albrechtsveld 81**
**NL-2804 WE Gouda(NL)**
Inventor: **De Boer, Rudolf**
**Diedenweg 8**
**NL-6703 GV Wageningen(NL)**

(74) Representative: **van der Beek, George Frans, Ir. et al**
**Nederlandsch Octrooibureau Scheveningseweg 82 P.O. Box 29720**
**NL-2502 LS 's-Gravenhage(NL)**

## Description

The invention relates to a dessert product selected from the group consisting of pudding and custard, which dessert product contains a whey protein concentrate product, and to a process for preparing such a dessert product.

Whey protein concentrate is obtained by ultrafiltration of whey, which yields an ultrafiltration permeate and an ultrafiltration retentate having a higher protein concentration than the whey starting material. Recently many attempts have been made to utilize such a whey protein concentrate in the preparation of food products. Thus, the use of whey protein concentrate in the preparation of yoghurt is e.g. disclosed in Journal of Dairy Science 66 (1983), pages 422-429, Dairy Industries International, October 1983, pages 17-19, and October 1984, pages 28 and 29 and The Australian Journal of Dairy Technology, December 1982, pages 139-142, and March 1984, pages 33-36. GB-A-2,065,137 mentions the replacement of non-fat dry milk by whey protein concentrate in baked goods, beverages and frozen desserts. GB-A-2,020,667 discloses the use of a whey protein product in dietetic food products, which whey protein product is obtained by subjecting whey to a heat treatment to denature the proteins present in it and separating the denatured proteins from the other non-fat constituents of the whey by ultrafiltration and, if desired, subjecting the retentate obtained by the ultrafiltration to a complementary heat treatment for denaturing the proteins.

It has now been found that whey protein concentrate can be advantageously used in the preparation of dessert products such as pudding and custard. However, it has appeared that incorporation of whey protein concentrate as such in pudding and custard mixes does not yield acceptable products. It is true, that in an article of F.E. McDonough et al. in Journal of Dairy Science, 57, No. 12, (1974), pages 1438-1443 the statement can be found that by heating skim milk containing 1.5% whey protein at 85°C for 5 minutes a custard-like gel is formed with sufficient body to stand alone without leakage when it was removed from the container, but it has appeared that it is not possible to prepare in this way pudding and custard, which are acceptable for the consumer with respect to structure as well as taste.

It is known from Deutsche Molkereizeitung (München), F48/1980, pages 1788-1790, to subject a mixture of whey and skim milk to ultrafiltration at 55°C to obtain a concentrate having a dry substance content of 17%. Immediately after the ultrafiltration the said concentrate may be homogenized at a temperature above 60°C under a pressure above 100 bars to obtain a foam structure showing a volume increase over the original mixture of 50%. Because the concentrate is said to form a gel by heating above 70°C, it is clear that the abovementioned homogenization will not be carried out above 70°C,. However, it will be apparent that substantial no denaturation of the proteins will take place at that low temperature. Thus, the use of this known product in pudding or custard will lead to a coarse structure in the resulting dessert product, which is not acceptable to the consumer.

It has now been found that an excellent dessert product selected from the group consisting of pudding and custard can be prepared by incorporating therein a whey protein concentrate product prepared by subjecting a whey protein concentrate by ultrafiltration of whey to a treatment which leads to complete denaturation.

Thus the invention relates to a dessert product selected from the group consisting of pudding and custard, which is characterized by a content of a whey protein concentrate product (WPCP) prepared by subjecting a whey protein concentrate obtained by ultrafiltration of whey to a heat treatment at 85-95°C for 5-45 minutes which leads to complete denaturation and homogenizing the heat treated product.

The invention further relates to a process for preparing a dessert product selected from the group consisting of pudding and custard which comprises combining conventional ingredients of a dessert product selected from the group consisting of pudding and custard with a whey protein concentrate product (WPCP) prepared by subjecting a whey protein concentrate obtained by ultrafiltration of whey to a heat treatment at 85-95°C for 5-45 minutes which leads to complete denaturation and homogenizing the heat treated product.

Surprisingly it has been found that the dessert products of the invention all show a good structure and a very agreeable taste.

Furthermore is has been found surprisingly that the WPCP used according to the invention can partially replace both the thickening agents normally used in the preparation of dessert products and the skim milk ingredients used. Thus, in the preparation of pudding 15-30% of gelatine, a thickener normally used, and up to 75% and preferably 40-60% of the skim milk ingredients of the pudding may be replaced by the WPCP.

In the preparation of custard 5-15% of starch, carboxymethylcellulose or carragen, which are used as thickeners, and up to 75% and preferably 25-50% of the skim milk ingredients of the custard may be replaced by the WPCP.

For the preparation of the whey protein concentrate to be used according to the invention as a starting material any whey derived from milk may be used. In most cases sweet cheese whey is used, but also casein whey and whey obtained in the preparation of quarg are useful in principle.

As a whey protein concentrate any concentrate obtained by the ultrafiltration of whey may be used. In many cases it is advantageous to concentrate the whey first, e.g. by evaporation under reduced pressure and/or by reverse osmosis, before the whey is subjected to ultrafiltration. In this way the efficiency of the ultrafiltration is increased. The composition of the whey protein concentrate finally obtained depends, among others, on the degree to which the whey is concentrated before being subjected to the ultrafiltration, and on the volume reduction or concentration factor applied in the ultrafiltration itself.

The whey protein concentrate used according to the invention are preferably in a liquid or at least pourable form when used.

The denaturing treatment of the whey protein concentrate is carried out at a temperature of 85-95°C for 5-45 minutes, whereby coagulation of the whey protein occurs. After this denaturing treatment the resulting product is homogenized, preferably using a pressure of 50-250 bar.

When a pudding is to be prepared the denatured and homogenized WPCP is mixed with the conventional ingredients of pudding, including skim milk, cream, skim milk powder, sugar or other sweeteners, starch, gelatine and colouring agent, after the mixture of these substances has been heated to a temperature preferably in the range of 85-95°C. By the addition of the WPCP the mixture is cooled to a temperature of preferably in the range of 72-80°C. The mixture is maintained at this temperature for some time.

After further cooling of the mixture a pudding is obtained, the firmness of which corresponds with that of pudding prepared in the conventional way without the use of the WPCP according to the invention.

When minor percentages of the skim milk ingredients in the pudding are replaced by the WPCP, e.g. up to 25%, this WPCP can also be mixed with the other ingredients of the pudding before these are heated and is thus heated together with these other ingredients.

According to the invention the term "pudding" comprises any type of pudding or blancmange including, among others, whipped pudding of the Bavarois cream type, chipolatapudding and so-called mousses.

When a custard is to be prepared the denatured and homogenized WPCP is cooled and then mixed with the conventional ingredients of custard including skim milk, cream, sugar or other sweeteners, starch, thickening agents, colouring and flavouring substances. The resulting mixture is heated at a temperature preferably in the range of 90-140°C and then cooled. The consistency properties of the resulting custard correspond with those of a custard prepared in the conventional way without the use of the WPCP of the invention.

According to the invention the term "custard" comprises any type of custard.

The following examples explain the invention.

Example I

Sweet cheese whey obtained in the production of Gouda cheese was concentrated by means of reverse osmosis to a whey concentrate having a protein content of 1% by weight. 1000 parts by weight of this whey concentrate were subjected to ultrafiltration in such a manner that 190 parts by weight of whey protein concentrate with a protein content of 4.43% by weight and 810 parts by weight of permeate having a dry matter content of 6.1% by weight are obtained.

60 parts by weight of this whey protein concentrate having a protein content of 4.43% by weight were heated for 20 minutes at 92°C, resulting in coagulation of the whey protein. The system, which had become inhomogeneous through sagging, was then homogenized using a pressure of 200 bar and cooled to 7°C, whereupon it was ready for the production of pudding.

For the preparation of 146 parts by weight of pudding in known manner, sufficient cream having a fat content of 35% by weight was added to 115 parts by weight of skim milk having a protein content of 3.5% by weight to obtain a fat content of a mixture of 2.62% by weight. Skim milk powder (3.5 parts by weight), sugar, starch, gelatine and colouring agent were then added. The resulting mix was heated to 92°C and kept at that temperature for 20 minutes. Flavouring substances were then added at a temperature of 75°C, whereupon the product was packed. The samples were cooled in the packages to 7°C and kept at that temperature.

For the preparation of 146 parts by weight of pudding according to the invention, 57.5 parts by weight of skim milk with a protein content of 3.5% by weight and 1.75 parts by weight of skim milk powder with a protein content of 35.7% by weight were replaced in the abovedescribed method by 60 parts by weight of the abovedescribed homogenized whey protein concentrate with a protein content of 4.43% by weight. This protein concentrate was added to the other constituents after the mixture of the other constituents had been heated to 92°C and kept at that temperature for 20 minutes. The whey protein concentrate was added over a period of 10 minutes.

During the addition of the homogenized whey protein concentrate to the other constituents the mix was heated in such a manner that the temperature of the mix after the addition amounted to 75°C. At that temperature the flavouring substances were again added, after which the product was packed, cooled in the package to 7°C, and kept at that temperature.

The firmness of the two puddings, measured with a penetrometer, was the same. On the other hand, for the preparation of the pudding according to the invention only half the amount of skim milk used in the known preparation of pudding was used. It was possible to reduce the gelatine content by 17%.

Example II

6.5 parts by weight of the whey protein concentrate having a protein content of 4.43% by weight as prepared according to example I where diluted with 2 parts by weight of water to give a final protein content of 3.39% by weight. The mixture was heated for 20 minutes at 92°C, thereafter homogenized using a pressure of 200 bar and cooled to 7°C, whereupon it was ready for the production of custard.

For the preparation of 40 parts by weight of custard mix in known manner, sufficient cream having a fat content of 51.9% was added to 34 parts by weight of skim milk having a protein content of 3.39% by weight to obtain a fat content of the mixture of 3.0% by weight. Sugar, starch, thickening agents, colouring and flavouring agents were then added. The resulting mix was heated to 105°C and thereafter cooled to 7°C, whereupon the product was packed.

For the preparation of 40 parts by weight of custard mix according to the invention, 25.5 parts by weight of skim milk having a protein content of 3.39% by weight where mixed with 8.5 parts by weight of the above described homogenized whey protein concentrate product having a protein content of 3.39% by weight. Subsequently sufficient cream having a fat content of 51.9% by weight was added to obtain a fat content of the mixture of 3.0% by weight. Sugar, starch, thickening agents, flavouring and colouring agents were then added. The mixture was heated to 105°C and then cooled to 7°C, whereupon the product was packed.

The consistency properties of both custards measured with the Posthumus funnel and the viscosigraph were on the same level. For the preparation of the custard according to the invention 75% of the amount of skim milk as used in the known preparation of custard was employed. The starch content was 7.5% lower.

**Claims**
**Claims for the following Contracting States :**

**BE, CH, DE, FR, GB, IT, LI, LU, NL, SE**

1. Dessert product selected from the group consisting of pudding and custard characterized by a content of whey protein concentrate product prepared by subjecting a whey protein concentrate obtained by ultrafiltration of whey to a heat treatment at 85-95°C for 5-45 minutes which leads to complete denaturation and homogenizing the heat treated product.

2. Process for preparing a dessert product selected from the group consisting of pudding and custard which comprises combining conventional ingredients of a dessert product selected from the group consisting of pudding and custard with a whey protein concentrate product prepared by subjecting a whey protein concentrate obtained by ultrafiltration of whey to a heat treatment at 85-95°C for 5-45 minutes which leads to complete denaturation and homogenizing the heat treated product.

3. Process according to claim 2, wherein the homogenization treatment is carried out with the use of a pressure of 50-250 bar.

4. Process according to anyone of the claims 2 and 3 for the preparation of pudding, characterized in that the whey protein concentrate product is added to the other ingredients of the pudding after these other ingredients have been heated together.

5. Process according to anyone of the claims 2 and 3 for the preparation of custard, characterized in that the whey protein concentrate product is mixed with the other ingredients of the custard and the resulting mixture is heated, preferably at a temperature of 90-140°C.

**Claims for the following Contracting State : AT**

1. Process for preparing a dessert product selected from the group consisting of pudding and custard which comprises combining conventional ingredients of a dessert product selected from the group consisting of pudding and custard with a whey protein concentrate product prepared by subjecting a whey protein concentrate obtained by ultrafiltration of whey to a heat treatment at 85-95°C for 5-45 minutes which leads to complete denaturation and homogenizing the heat treated product.

2. Process according to claim 1, wherein the homogenization treatment is carried out with the use of a pressure of 50-250 bar.

**3.** Process according to anyone of the claims 1 and 2 for the preparation of pudding, characterized in that the whey protein concentrate product is added to the other ingredients of the pudding after these other ingredients have been heated together.

**4.** Process according to anyone of the claims 1 and 2 for the preparation of custard, characterized in that the whey protein concentrate product is mixed with the other ingredients of the custard and the resulting mixture is heated, preferably at a temperature of 90-140 ° C.

**Patentansprüche**
**Patentansprüche für folgende Vertragsstaaten : BE, CH, DE, FR, GB, IT, LI, LU, NL, SE**

**1.** Dessertprodukt, ausgewählt aus der Gruppe bestehend aus Pudding und Custard, gekennzeichnet durch einen Gehalt an MOlkeneiweisskonzentrat, das hergestellt ist, indem ein Molkeneiweisskonzentrat,das erhalten wird durch Ultrafiltration von Molke, 5 bis 45 Minuten einer Wärmebehandlung bei 85 bis 95 ° C unterworfen wird, die zu einer vollständigen Denaturierung und Homogenisierung des wärmebehandelten Produktes führt.

**2.** Verfahren zur Herstellung eines Dessertproduktes, ausgewählt aus der Gruppe bestehend aus Pudding und Custard durch Kombinieren üblicher Ingredienzien eines Dessertproduktes, ausgewählt aus der Gruppe bestehend aus Pudding und Custard, mit einem Molkeneiweisskonzentratprodukt, das hergestellt ist, indem man ein Molkeneiweisskonzentrat, erhalten durch Ultrafiltration von Molke, 5 bis 45 Minuten einer Wärmebehandlung bei 85 bis 95 ° C unterwirft, was zur vollständigen Denaturierung und Homogenisierung des wärmebehandelten Produktes führt.

**3.** Verfahren nach Anspruch 2, bei dem die Homogenisierungsbehandlung unter Anwendung eines Druckes von 50 bis 250 bar durchgeführt wird.

**4.** Verfahren nach einem der Ansprüche 2 und 3 zur Herstellung von Pudding, dadurch gekennzeichnet, dass das Molkeneiweisskonzentrat den anderen Bestandteilen des Puddings zugesetzt wird, nachdem diese anderen Bestandteile zusammen erhitzt worden sind.

**5.** Verfahren nach einem der Ansprüche 2 und 3 zur Herstellung von Custard, dadurch gekennzeichnet, dass das Molkeneiweisskonzentrat mit den anderen Bestandteilen des Custards vermischt und das entstandene Gemisch erhitzt wird, vorzugsweise auf eine Temperatur von 90 bis 140 ° C.

**Patentansprüche für folgenden Vertragsstaat : AT**

**1.** Verfahren zur Herstellung eines Dessertproduktes, ausgewählt aus der Gruppe bestehend aus Pudding und Custard, durch Kombinieren üblicher Ingredienzien eines Dessertproduktes, ausgewählt aus der Gruppe bestehend aus Pudding und Custard, mit einem Molkeneiweisskonzentrat, das hergestellt ist, indem man ein Molkeneiweisskonzentrat, das durch Ultrafiltration von Molke erhalten wird, 5 bis 45 Minuten einer Wärmebehandlung bei 85 bis 95 ° C unterwirft, was zu einer vollständigen Denaturierung und Homogenisierung des wärmebehandelten Produktes führt.

**2.** Verfahren nach Anspruch 1, bei dem die Homogenisierungsbehandlung unter Anwendung eines Druckes von 50 bis 250 bar durchgeführt wird.

**3.** Verfahren nach einem der Ansprüche 1 und 2 zur Herstellung von Pudding, dadurch gekennzeichnet, dass das Molkeneiweisskonzentrat den anderen Bestandteilen des Puddings zugesetzt wird, nachdem diese anderen Bestandteile zusammen erhitzt worden sind.

**4.** Verfahren nach einem der Ansprüche 1 und 2 zur Herstellung von Custard, dadurch gekennzeichnet, dass das Molkeneiweisskonzentrat mit den anderen Bestandteilen des Custards vermischt und das entstandene Gemisch erhitzt wird, vorzugsweise auf eine Temperatur von 90 bis 140 ° C.

**Revendications**
**Revendications pour les Etats contractants suivants : BE, CH, DE, FR, GB, IT, LI, LU, NL, SE**

**1.** Produit de dessert choisi parmi le groupe du pudding et du flan, caractérisé par une teneur en un produit à base de concentré de protéines de petit lait préparé en soumettant ledit concentré de protéines de petit lait obtenu par ultrafiltration de petit lait à un traitement thermique de 85 à 95 ° C pendant 5 à 45 minutes, qui conduit à la dénaturation totale et à l'homogénéisation du produit traité par la chaleur.

**2.** Procédé pour préparer un produit de dessert choisi parmi le groupe du pudding et du flan, qui comprend la combinaison des ingrédients conventionnels d'un produit de dessert, choisis parmi le groupe du pudding et du flan, avec un produit à base de concentré de protéines de petit lait, préparé en soumettant un concentré de protéines de petit lait obtenu par ultrafiltration de petit lait, à un traitement thermique de 85 à 95°C pendant 5 à 45 minutes, qui conduit à la dénaturation totale et à l'homogénéisation du produit traité par la chaleur.

**3.** Procédé selon la revendication 2, dans laquelle le traitement d'homogénéisation est exécuté en utilisant une pression de 50 à 250 bars.

**4.** Procédé selon l'une quelconque des revendications 2 ou 3, pour la préparation de pudding, caractérisé en ce que le produit à base de concentré de protéines de petit lait est ajouté aux autres ingrédients du pudding, après que les autres ingrédients du pudding aient été chauffés ensemble.

**5.** Procédé selon l'une quelconque des revendications 2 ou 3, pour la préparation de flans, caractérisé en ce que le produit à base de concentré de protéines de petit lait est mélangé avec les autres ingrédients du flan, et que le mélange résultant est chauffé, de préférence à une température comprise entre 90 et 140°C.

**Revendications pour l'Etat contractant suivant : AT**

**1.** Procédé pour préparer un produit de dessert choisi parmi le groupe du pudding et du flan, qui comprend la combinaison des ingrédients conventionnels d'un produit de dessert, choisis parmi le groupe du pudding et du flan, avec un produit à base de concentré de protéines de petit lait, préparé en soumettant un concentré de protéines de petit lait obtenu par ultrafiltration de petit lait, à un traitement thermique de 85 à 95°C pendant 5 à 45 minutes, qui conduit à la dénaturation totale et à l'homogénéisation du produit traité par la chaleur.

**2.** Procédé selon la revendication 2, dans laquelle le traitement d'homogénéisation est exécuté en utilisant une pression de 50 à 250 bars.

**3.** Procédé selon l'une quelconque des revendications 2 ou 3, pour la préparation de pudding, caractérisé en ce que le produit à base de concentré de protéines de petit lait est ajouté aux autres ingrédients du pudding, après que les autres ingrédients du pudding aient été chauffés ensemble.

**4.** Procédé selon l'une quelconque des revendications 2 ou 3, pour la préparation de flans, caractérisé en ce que le produit à base de concentré de protéines de petit lait est mélangé avec les autres ingrédients du flan, et que le mélange résultant est chauffé, de préférence à une température comprise entre 90 et 140°C.